# EUROPÄISCHE PATENTANMELDUNG

(11) **EP 3 145 055 A1**
(43) Veröffentlichungstag der Anmeldung: **22.03.2017**
(21) Anmeldenummer: 15185695.2
(22) Anmeldetag: 17.09.2015
(51) Int. Cl.: H02K 1/16, H02K 15/02

(54) **STATORBLECHPAKET UND VERFAHREN ZUR HERSTELLUNG**

(71) Anmelder: Siemens Aktiengesellschaft, 80333 München (DE)
(72) Erfinder: Wende, Konrad, 13347 Berlin (DE); Balzer, Christoph, 12163 Berlin (DE); Schulz, Sabrina, 13125 Berlin (DE)

(57) **Zusammenfassung**

Ein Statorblechpaket (1) weist Druckplatten (2,4) auf, wobei eine Vielzahl von Riegel (3) die zumindest zwei Druckplatten (2,4) miteinander verbinden, wobei die Druckplatten (2,4) insbesondere endseitige Druckplatten (2,4) sind. Die Riegel (3) sind zumindest teilweise in den Nuten (48) von Elektroblechen. Die Riegel (3) werden mit den Druckplatten (2,4) verschweißt. Das Statorblechpaket eignet sich insbesondere für einen Pod-Antrieb.

## Beschreibung

Die Erfindung betrifft ein Statorblechpaket einer elektrischen Maschine, welche insbesondere in einem POD-Antrieb eines Schiffes einsetzbar ist.

Das Statorblechpaket weist eine Vielzahl von Blechen auf. Mittels der Bleche werden Nuten ausgebildet, welche für Statorwicklungen vorgesehen sind. Das Statorblechpaket kann für eine elektrische Maschine vorgesehen sein, welche beispielsweise eine Asynchronmaschine oder eine Synchronmaschine ist. Die elektrische Maschine kann als Motor oder als Generator betrieben werden. Abhängig vom Einsatzgebiet der elektrischen Maschine können an diese verschiedenste Anforderungen gestellt werden. Eine Anforderung ist beispielsweise die einer hohen Steifigkeit. Dabei kann die Steifigkeit der elektrischen Maschine auch die Steifigkeit des Statorblechpaketes betreffen. Eine weitere Anforderung an die elektrische Maschine oder an das Statorblechpaket ist beispielsweise ein kompakter Aufbau.

Der Gondelantrieb kommt beispielsweise als Antriebseinheit bei einem Schiff zum Einsatz, wobei sich der Gondelantrieb außerhalb des Schiffsrumpfes und unterhalb des Wasserspiegels, insbesondere im Meerwasser, befindet und einen Propeller antreibt. Derartige Gondelantriebe sind auch unter der Bezeichnung POD-Antriebe bekannt. Rotierende elektrische Maschinen werden beispielsweise im Schiffsbereich u.a. für sogenannten Ruderpropeller (POD-Antriebe) eingesetzt. An die Statorbaugruppe für den Schiffsantrieb können dabei verschiedene Anforderungen gestellt werden wie z.B. ein geringer Außendurchmesser für ein vorteilhaftes hydrodynamische Verhalten der Gesamtmaschine oder ein großer Innendurchmesser, sowie eine große Aktivteillänge zur Erzeugung des Drehmoments. Hieraus ergibt sich für das Gesamtdesign des Stators eines POD-Antriebes in einer groben Abstraktion ein "langes dünnwandiges Rohr". Hieraus kann sich für das Statorblechpaket eine geringere Steifigkeit als bei herkömmlichen Statorblechpaketen ergeben.

Aus der DE 877 254 C ist beispielsweise ein Gondelantrieb bekannt, der einen Elektromotor in einem Motorgehäuse aufweist, wobei das Motorgehäuse von dem Gondelgehäuse umschlossen wird.

Eine Aufgabe der Erfindung ist es bei einem Statorblechpaket verschiedene Anforderungen der obig beschriebenen Art zu erfüllen. Dabei betreffen die Erfindung und die Aufgabe nicht nur ein Statorblechpaket, sondern auch eine elektrische Maschine, ein Verfahren zur Herstellung der elektrischen Maschine und die Verwendung der elektrischen Maschine insbesondere als POD-Antrieb.

Ein Lösung der Aufgabe ergibt sich bei einem Statorblechpaket nach Anspruch 1 und bei einem Verfahren zu dessen Herstellung nach Anspruch 13. Ausgestaltungen der Erfindung ergeben sich nach den Ansprüchen 2 bis 12 bzw. 14 bis 17. Weitere Lösungen ergeben sich bei einer elektrischen Maschine mit dem Statorblechpaket und bei einem POD-Antrieb eines Schiffes mit einer elektrischen Maschine mit dem Statorblechpaket.

Ein Statorblechpaket weist endseitig Druckplatten auf. Die Druckplatte kann ringförmig oder scheibenförmig sein. Eine ringförmige Druckplatte kann auch als Druckringbezeichnet werden. Je Stirnseite ist zumindest eine Druckplatte vorgesehen. Die endseitigen Druckplatten sind durch eine Vielzahl von Riegel miteinander verbunden. Die Riegel sind beispielsweise Flachstäbe, Flachbänder oder Rundstäbe. Die Riegel verlaufen insbesondere im Wesentlichen axial parallel. Durch die Riegel lassen sich axiale Verspannkräfte auf das Blechpaket ausüben. Die Riegel können dabei innenliegende oder außenliegende Spannbolzen ersetzen oder ergänzen. Auch die Spannbolzen dienen der Ausübung von axialen Verspannkräften.

Die Druckplatte kann verschieden ausgeführt sein. Die Druckplatte kann einteilig oder mehrteilig sein. Die Druckplatte kann aus einem Vollmaterial sein, oder auch aus einem Verbund mehrerer miteinander verbundener Elektrobleche, oder speichenförmig, oder eine andere Gestalt aufweisen.

Durch die Riegel erhöht sich die Steifigkeit des Blechpaketes. In einer weiteren Ausgestaltung des Blechpaketes wird dessen Steifigkeit zusätzlich durch Backlack erhöht, also durch eine Backlackbehandlung des Blechpaketes.

Eine hohe Steifigkeit des Blechpaketes und damit auch des Stators der elektrischen Maschine ermöglicht ein schlankes Design des Stators. Dies kann beispielsweise bei POD-Antrieben für Schiffe vorteilhaft sein, da so ein besseres Strömungsverhalten des POD's (Gondelantrieb) realisierbar ist. Durch die Verwendung von Riegel zur Erhöhung der Steifigkeit ist es auch möglich Kosten zu sparen, die sonst für andere umfangreiche Vorrichtungen zu Erhöhung der Steifigkeit des Blechpaketes notwendig wären.

Die Steifigkeit des Blechpaketes kann weiterhin beispielsweise durch eine große Jochhöhe oder durch ein anderes Länge-Durchmesser-Verhältnis erzielt werden.

Die Verwendung der Riegel kann einen geringfügig höheren Materialmehraufwand bedeuten, der aber durch den optimierten Fertigungsprozess ausgeglichen werden kann.

In einer Ausbildung des Statorblechpaketes befinden sich die Riegel zumindest teilweise in Nuten des Blechpaketes also folglich in Nuten von Elektroblechen. Die Riegel können so in die Nuten ganz oder teilweise versenkt werden. Die Nuten für die Riegel sind von den Nuten für die Wicklungen zu unterscheiden. Bei einer als Innenläufer ausgebildeten elektrischen Maschine befinden sich die Nuten für die Wicklungen innen, sind mit ihren Öffnungen also zur Achse gerichtet. Bei einer als Innenläufer ausgebildeten elektrischen Maschine befinden sich die Nuten für die Riegel über den Umfang verteilt außen, also mit ihren Öffnungen radial nach außen gerichtet.

Durch die Riegel und Druckplatten kann nicht nur die Steifigkeit verbessert werden, sondern auch die Wärmeabfuhr, da die Riegel zumindest teilweise in das Joch des Blechpaketes integriert sind. Zudem wird durch das schlanke Design, als die mögliche geringere Jochhöhe der Wärmewiderstand reduziert. Gleichzeit können auch Materialkosten durch Materialeinsparungen sinken.

In einer Ausgestaltung des Statorblechpaketes sind die Riegel mit den endseitigen Druckplatten verschweißt. Durch das Verschweißen lässt sich eine sehr strapazierfähige Verbindung zwischen Riegel und Druckplatte herstellen.

In einer Ausgestaltung des Statorblechpaketes erfolgt die Erhöhung der Steifigkeit durch Flachstäbe. Um die Blechlagen des Statorblechpakets axial zu verspannen, sind am Außendurchmesser Flachstäbe angeordnet, die an den Druckplatten verschweißt sind. Dadurch wird das Blechpaket axial verspannt. Der Querschnitt der Flachstäbe wird so groß gewählt, dass die notwendige Steifigkeit des gesamten Statorblechpakets erzielt wird. Mit vergleichsweise wenig Aufwand kann so die notwendige Steifigkeit im Blechpaket erzeugt werden und gleichzeitig ein schlankes Design erzielt werden. Beim Einsatz des Statorblechpaketes in einem Stator einer elektrischen Maschine für einen POD-Antrieb kann so ein hydrodynamisch günstiger Maschinenquerschnitt erzielt werden, damit im Endeffekt direkte Treibstoff-, bzw. Betriebskosten eingespart werden.

In einer Ausgestaltung des Statorblechpakets weist dieses zwischen den jeweils endseitigen Druckplatten zumindest eine Zwischenplatte auf. Auch durch die Zwischenplatte kann Druck verteilt werden. Die Zwischenplatte kann somit auch als Zwischendruckplatte bezeichnet werden.

In einer Ausgestaltung des Statorblechpaketes sind die Riegel mit der Zwischenplatte oder mit einer Vielzahl von Zwischenplatten verschweißt. Dies trägt zur Erhöhung der Steifigkeit bei. Die Zwischenplatten sind beispielsweise symmetrisch im Blechpaket verteilt. Auch die Riegel können symmetrisch über den Umfang des Blechpaketes verteilt sein.

In einer Ausgestaltung des Statorblechpaketes sind die Riegel zumindest teilweise durch die endseitigen Druckplatten geführt. Dies erleichtert eine Schweißverbindung zwischen den Riegel und der Druckplatte.

In einer Ausgestaltung des Statorblechpaketes sind die endseitigen Druckplatten abgedreht und/oder abgefrässt. Durch das Abdrehen wird eine kompaktere Bauform erzielt.

In einer Ausgestaltung des Statorblechpaketes ist das Statorblechpaket abgedreht. Auch dies dient einer kompakteren Bauform.

In einer Ausgestaltung des Statorblechpaketes weist dieses Zähne auf, wobei zwischen den Zähnen die Wicklungen zu positionieren sind, wobei die Zahnhöhe größer ist als die Höhe der endseitigen Druckplatte. Auch somit kann man den Durchmesser reduzieren.

In einer Ausgestaltung des Statorblechpaketes übersteigt die Höhe des Jochs das 1,5-fache der Zahnhöhe nicht. Die Jochhöhe beträgt also höchstens 150% der Zahnhöhe. So wird zwar der Durchmesser erhöht, aber auch die Stabilität durch das höhere Joch.

In einer Ausgestaltung des Statorblechpaketes ist die Zahnhöhe größer als die Höhe des Jochs. Dabei ist das Joch derart hoch auszuführen, dass es noch genügend Fluss führen kann. Kann genügend Fluss geführt werden ist das Statorblech derart ausführbar, dass die Jochhöhe höchstens 80% der Zahnhöhe beträgt.

Durch derartige Maßnahmen lässt sich der Durchmesser des Statorblechpaketes bei vergleichsweise großer Länge reduzieren. Häufig wäre sonst ein größerer Durchmesser, eine geringe Länge und/oder eine größere Jochhöhe notwendig. Die einzelnen Blechlagen werden bei herkömmlichen Blechpaketen häufig nur durch Spanbolzen, die sich innerhalb des Blechpakets befinden, axial verspannt. Eine zusätzliche Steifigkeit wird in manchen Fällen während der Fertigung durch eine Vorrichtung aufgebracht, die nach den Fertigungsschritten aber wieder entfernt wird.

In einer Ausgestaltung des Statorblechpaketes ist der Abstand der Riegel in Umfangsrichtung kleiner als der Abstand der Zwischenplatten in axialer Richtung. Damit lässt sich eine besonders hohe Steifigkeit erzielen.

In einer Ausgestaltung des Statorblechpaketes ist dieses für einen Gondelantrieb vorgesehen. Durch den geringen Durchmesser kann der Querschnitt der Gondel klein gehalten werden. Dies ist insbesondere auch deswegen möglich da das Statorblechpaket schon eine hohe Steifigkeit hat und die Steifigkeit des Gehäuses der Gondel nicht Übergebühr hoch auszulegen ist. Die Steifigkeit des Statorblechpaketes kann auch dadurch erhöht sein, dass sobald in das Statorblechpaket die Wicklung eingelegt ist das Statorjoch getränkt wird um eine hohe endgültige Steifigkeit zu erreichen.

In einem Verfahren zur Herstellung eines Statorblechpaketes werden endseitige Druckplatten mit Riegel verschweißt. Hernach wird das Statorblechpaket abgedreht um dessen Umfang zu reduzieren. So wird beispielsweise überstehendes Material der Flachstäbe und Druckplatten abgedreht. Deswegen kann man hier auch von einer verlorenen Vorrichtung sprechen.

In einer Ausführung des Verfahrens wird die endseitige Druckplatte abgedreht oder abgefräst. Derart kann die Länge des Statorblechpaketes reduziert werden.

In einer Ausführung des Verfahrens wird das Statorblechpaket im Durchmesser so verkleinert, dass es in eine Gondel eingebracht werden kann.

Im Folgenden wird die Erfindung anhand der in den Figuren dargestellten Ausführungsbeispiele näher beschrieben und erläutert. Es zeigen:
- FIG 1: einen POD-Antrieb (Gondelantrieb);
- FIG 2: ein erstes Statorblechpaket;
- FIG 3: ein zweites Statorblechpaket;
- FIG 4: eine Stirnseite eines Statorblechpaketes;
- FIG 5: einen Längsschnitt durch das Statorblechpaket;
- FIG 6: einen Querschnitt durch das Statorblechpaket in einem Bereich eines Riegels;
- FIG 7: einen Ausschnitt aus FIG 4 und
- FIG 8: eine Druckplatte.

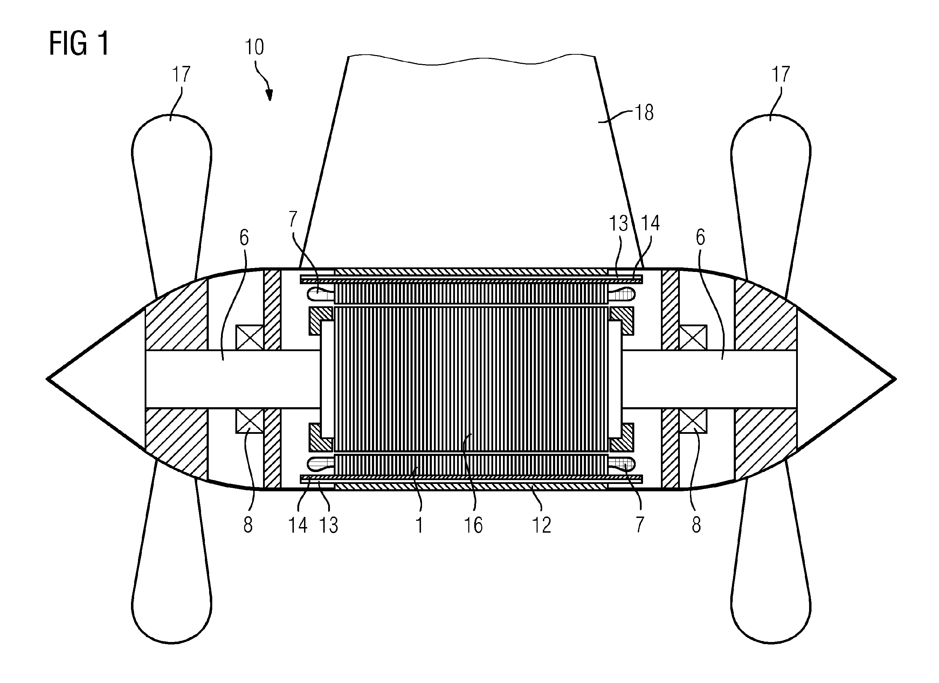

Die Darstellung nach FIG 1 zeigt ein POD-Antrieb 10, auch Gondelantrieb genannt. Der elektrische Gondelantrieb 10 ist mittels eines Schachtes 18 am Rumpf eines Schiffes zu befestigen und weist zum Antrieb des Schiffes Propeller 17 auf. Die Antriebsleistung wird dabei von einem Elektromotor aufgebracht, der einen hohlzylinderförmigen Stator mit einem Statorblechpaket 1 und einen im Stator drehbar gelagerten Rotor 16 aufweist, wobei der Rotor 16 mittels einer Welle 6 mit den Propellern 17 drehfest verbunden ist. Der Stator ist von einem Gehäuseteil 12 in Umfangsrichtung umschlossen, welches sich in axialer Richtung auf der Länge des Stators erstreckt. Weiterhin sind Kühlkanäle 13 vorgesehen, welche in axialer Richtung verlaufen und in welchen zur Kühlung des Elektromotors ein Kühlmedium fließen kann. Dabei werden die Kühlkanäle 13 nach radial innen jeweils durch eine Schicht 14 eines Materials begrenzt, welches eine Wärmeleitfähigkeit von zumindest 1 W/(m*K) aufweist und welches zumindest in einer meerwasserhaltiger Atmosphäre korrosionsbeständig ist. Der Stator weist neben dem Statorblechpaket 1 auch Wicklungen mit Wickelköpfen 7 auf, welche aus dem Statorblechpaket 1 herausragen. Der Rotor 16 ist über Lagern 8 gelagert.

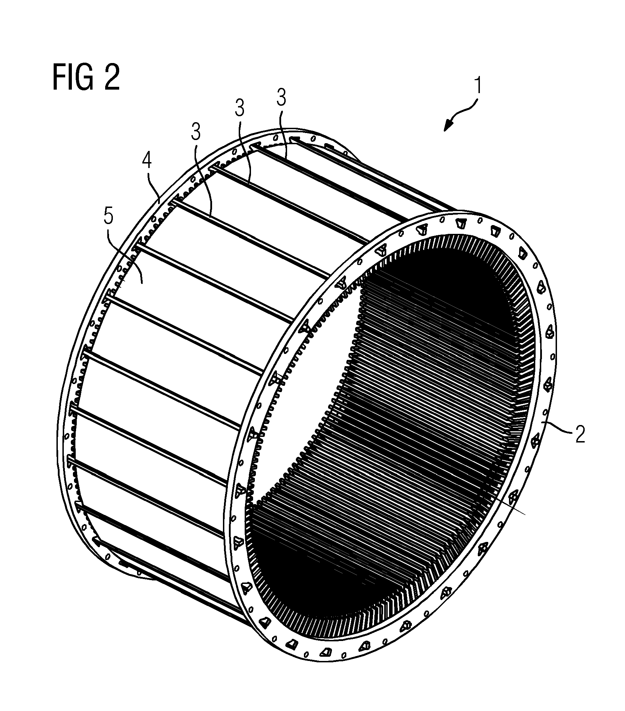

Die Darstellung nach FIG 2 zeigt ein erstes Statorblechpaket 1 mit endseitigen (also stirnseitigen) Druckplatten 2 und 4. Zwischen den Druckplatten 2 und 4 befindet sich eine Vielzahl von aneinandergereihten Elektroblechen 5. Die Druckplatten 2 und 4 sind über Riegel 3 miteinander verbunden. Die Druckplatten 2 und 4 sind über die Riegel 3 derart miteinander verbunden, dass die Druckplatten 2 und 4 eine Kraft auf die geschichteten Elektrobleche 5 derart ausüben, dass diese zusammengedrückt werden. Die Riegel 3 sind gleichmäßig über den Umfang des Statorblechpaketes 1 verteilt und zueinander parallel ausgerichtet. Die Riegel 3 nehmen zur Druckplatte 2 bzw. 4 einen rechten Winkel ein.

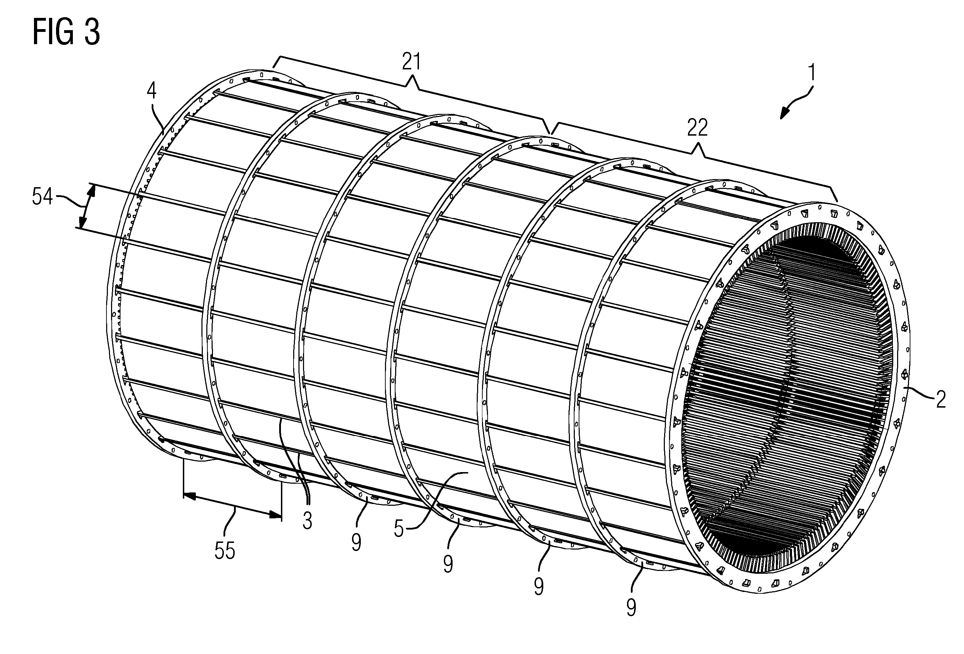

Die Darstellung nach FIG 3 zeigt ein zweites Statorblechpaket 1 mit endseitigen Druckplatten 2 und 4. Zwischen den Druckplatten 2 und 4 befindet sich eine Vielzahl von aneinandergereihten Elektroblechen 5. Die Druckplatten 2 und 4 sind über Riegel 3 miteinander verbunden. Ferner weist das Statorblechpaket 1 nach FIG 3 auch Zwischenplatten 9 auf, welche auch als Zwischendruckplatten bezeichnet werden können. Die Zwischenplatten können beispielsweise innerhalb des Blechpaketes Druckkräfte verteilen. Weiterhin ist es möglich die Riegel 3 mit den Zwischenplatten 9 zu verbinden. Die Verbindung ist beispielsweise eine Schweißverbindung. In einer Ausführungsform sind dort, wo sich Riegel 3 und Zwischenplatten 9 kreuzen, alle Riegel 3 mit den Zwischenplatten 9 verbunden, insbesondere verschweißt. Durch die Verbindung von Druckplatten 2 und 4 Zwischenplatten 9 und Riegel 3 ergibt sich eine Art Gitternetz, welches das Statorblechpaket 1 versteift und somit auch zu einer höheren Steifigkeit des Stators der elektrischen Maschine beiträgt. Das Statorblechpaket 1 nach FIG 3 weist eine erste Zone 21 und eine zweite Zone 22 auf. In der ersten Zone 21 sind die Riegel 3, die Zwischenbleche 9 und die Druckplatte 4 erhaben, sie reichen also über die Elektrobleche 5 hinaus. In der zweiten Zone 22 sind die Riegel 3, die Zwischenbleche 9 und die Druckplatte 2 nicht erhaben, sie reichen also nicht über die Elektrobleche 5 hinaus. In der zweiten Zone 22 bilden Riegel 3, Elektrobleche 5 und Druckplatte 2 denselben Umfangsradius aus. Dies wird dadurch erreicht, dass die zweite Zone 22 einer Drehbearbeitung unterzogen wird. Druckplatte 2, Riegel 3 und Zwischenplatten 9 sind in der zweiten Zone 22 abgedreht und bilden eine zylindrische Fläche aus. In einer Ausgestaltung des Statorblechpaketes können auch nur die Druckplatten die Riegel und die Zwischenplatten abgedreht sein, wobei die Elektrobleche 5 nicht abgedreht sind. Druckplatten und Riegel, sowie ggf. die Zwischenplatten werden dann auf den Umfang der Elektrobleche 5 abgedreht. Das Statorblechpaket 1 zeigt weiterhin eine Ausführung bei welcher der Abstand 54 der Riegel 3 zueinander in Umfangsrichtung kleiner ist als der Abstand 55 der Zwischenplatten 9 zueinander in axialer Richtung.

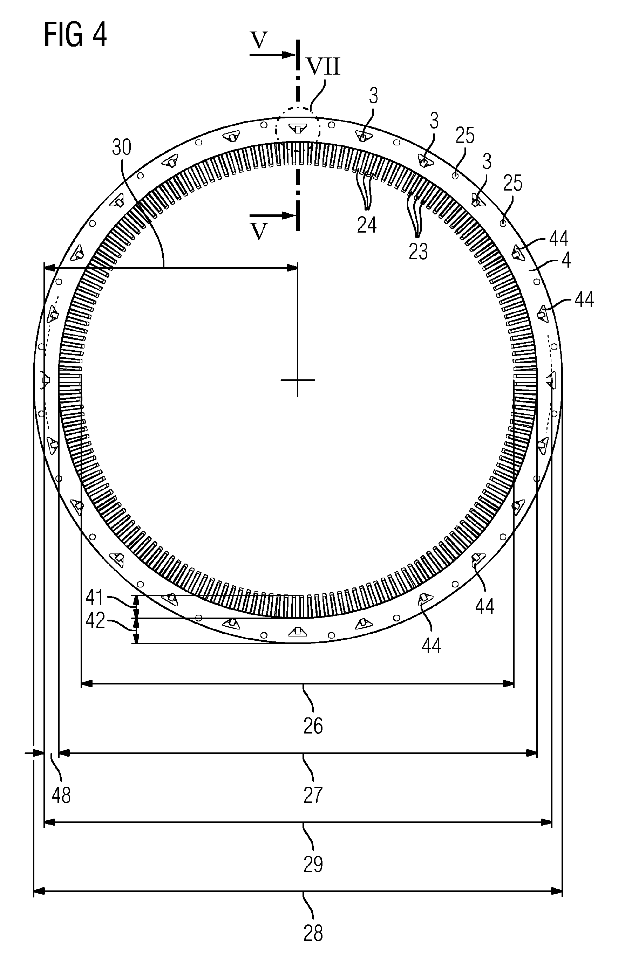

Die Darstellung nach FIG 4 zeigt eine Stirnseite eines Statorblechpaketes 1. Gezeigt sind Zähne 23 und dazwischen liegende Nuten 24 für Statorwicklungen. Die Druckplatte 4 weist Löcher 44 auf in welche Riegel 3 ragen. Die Riegel 3 sind mit der Druckplatte 4 verschweißt. Die Höhe 41 der Zähne 23 ist in etwa gleich groß der Höhe 42 der Druckplatte 4 bzw. der Höhe des Jochs. Die Enden der Zähne 23 bilden einen Innendurchmesser 26 aus. Die Druckplatte hat einen Außendurchmesser 28 und einen inneren Durchmesser 27. Aus der Differenz zwischen dem Außendurchmesser 28 der Druckplatte 4 und dem inneren Durchmesser 27 der Druckplatte 4 ergibt sich die Höhe der Druckplatte 4, d.h. die Höhe 42 des ausgebildeten Druckrings 4. In Spannlöcher 25 können Spannmittel wie Spannstäbe eingefügt werden. Mittels der Spannstäbe zwischen den Druckplatten eines Statorblechpaketes kann dieses zusammengespannt werden. Danach können die Riegel 3 mit den Druckplatten an beiden Stirnseiten des Statorblechpaketes verschweißt werden. Hiernach können die Spannstäbe wieder entfernt werden. Sind die Riegel 3 an den Druckplatten befestigt so kann die Höhe der Druckplatte 4 reduziert werden. Dies geschieht insbesondere durch Reduzierung des Außendurchmessers 28. Der Außendurchmesser 28 kann durch eine Drehbearbeitung oder durch eine Fräsbearbeitung reduziert werden. Dadurch kann die Jochhöhe 43 eingestellt werden. Nach der Bearbeitung weist die Druckplatte einen äußeren Durchmesser 29 auf. So ergibt sich ein verkleinerter Radius 30 für das Statorblechpaket.

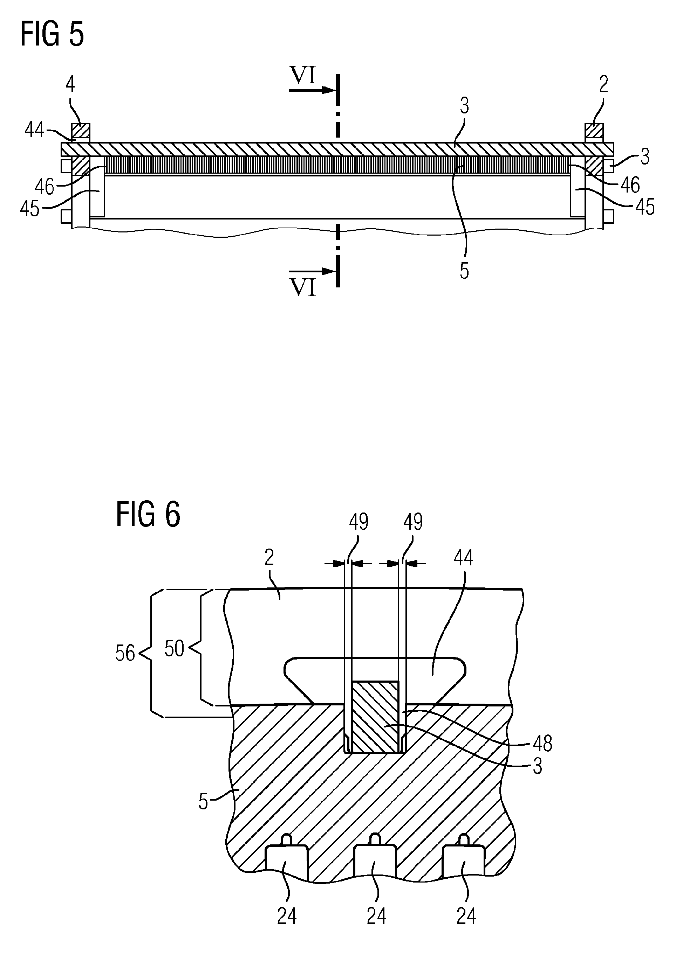

Die Darstellung nach FIG 5 zeigt einen Längsschnitt gemäß der Schnittebene V in FIG 4. FIG 5 zeigt zusätzlich die gepackten Elektrobleche 5 und endseitige Stegbleche 46. Zwischen den Stegblechen 46 und den Druckplatten 2 und 4 befinden sich Druckfinger 45 zur Übertragung der Kräfte. Die Riegel 3 ragen durch die Löcher 44 der Druckplatten 2 bzw. 4.

Die Darstellung nach FIG 6 zeigt einen Querschnitt durch das Statorblechpaket 1 in einem Bereich eines Riegels 3. Der Schnitt ergibt sich aus der Schnittebene VI nach FIG 5. Die Elektrobleche 5 weisen eine Riegelnut 48 auf in welche der Riegel 3 eingelegt ist. Die Riegelnut 48 ist breiter als der Riegel 3, so dass sich seitliche Abstände 49 ausbilden. In diesen Abständen 49 ist eine Hartmatte zur Positionierung einlegbar. Die Hartmatte kann sich beispielsweise vom Nutgrund bis zum Ende der Nut erstrecken oder vorher enden. Die Hartmatte kann auf beiden Seiten des Riegels in der Nut sein, oder nur auf einer. Die Hartmatte kann auch im Nutgrund sein, so dass der Riegel auf der Hartmatte aufliegt. Im fertigen Zustand des Statorblechpaketes ist der Bereich 50 oder sogar der Bereich 56 entfernt, so dass der Riegel 50 nicht mehr über das Elektroblech 5 hinaussteht.

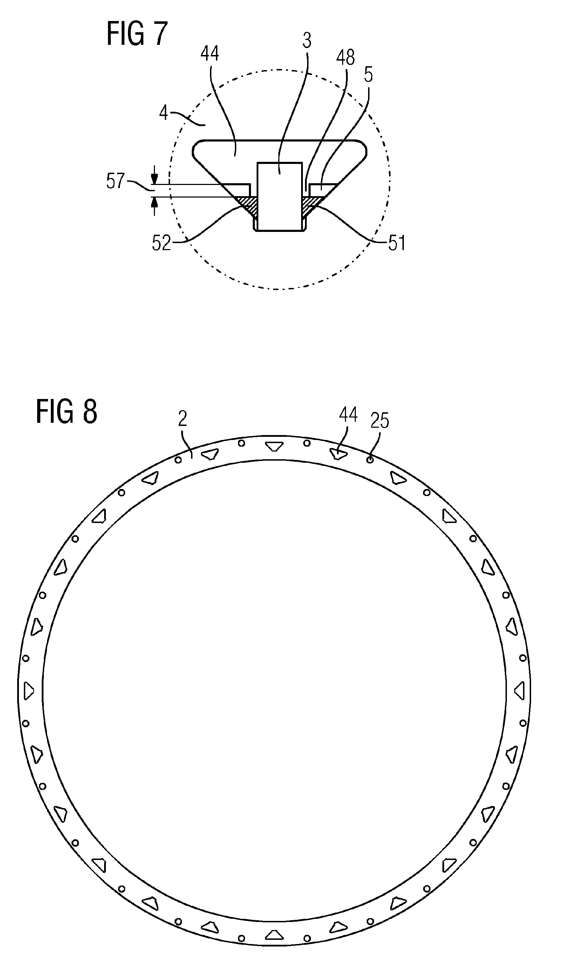

Die Darstellung nach FIG 7 zeigt einen Ausschnitt VII nach FIG 4. Dargestellt ist ein trapezförmiges Loch 44 in der Druckplatte 4, wobei in der Nut 48 für den Riegel 3 der Riegel eingepasst ist. Der Riegel 3 ist beidseitig in der Nut 48 mit der Druckplatte 4 verschweißt. Gezeigt sind die hierfür notwendigen Schweißnähte 51 und 52. Der Riegel oder die Riegel sind in einer Ausführungsform nur mit den Druckplatten und den Zwischenplatten verschweißt und nicht mit den Elektroblechen oder nur teilweise mit den Elektroblechen. Die Riegel können aber auch über die komplette Länge mit dem Blechpaket verschweißt werden. Der endgültige Außendurchmesser des Statorblechpaketes befindet sich in einem Bereich 57. Dies zeigt, dass die Schweißnähte 51, 52 nicht oder nur unwesentlich reduziert werden.

Die Darstellung nach FIG 8 zeigt die Druckplatte 2 separiert. Die Löcher 44 wie auch die Spannlöcher 25 sind über den Umfang symmetrisch verteilt. Durch die symmetrische Verteilung der Spannlöcher gelingt in der Fertigung eine symmetrische Verteilung der Spannkräfte. Durch die symmetrische Verteilung der Löcher 44 für die Riegel 3 gelingt eine symmetrische Verteilung der Spannkräfte im fertigen Statorblechpaket.

## Patentansprüche

1. Statorblechpaket (1) mit Druckplatten (2,4), wobei eine Vielzahl von Riegel (3) die zumindest zwei Druckplatten (2,4) miteinander verbinden, wobei die Druckplatten (2,4) insbesondere endseitige Druckplatten (2,4) sind.

2. Statorblechpaket (1) nach Anspruch 2, wobei sich die Riegel (3) zumindest teilweise in Nuten (48) von Elektroblechen (5) befinden.

3. Statorblechpaket (1) nach Anspruch 1 oder 2, wobei Riegel (3) mit den Druckplatten (2,4) verschweißt sind.

4. Statorblechpaket (1) nach Anspruch 1 oder 2, wobei das Statorblechpaket (1) zwischen den jeweils endseitigen Druckplatten () zumindest eine Zwischenplatte (9) aufweist.

5. Statorblechpaket (1) nach Anspruch 4, wobei die Riegel (3) mit den Zwischenplatten (9) verschweißt sind.

6. Statorblechpaket (1) nach einem der Ansprüche 1 bis 5, wobei die Riegel (3) zumindest teilweise durch die endseitigen Druckplatten (2,4) geführt sind.

7. Statorblechpaket (1) nach einem der Ansprüche 1 bis 5, wobei die endseitigen Druckplatten (2,4) abgedreht und/oder abgefräst sind.

8. Statorblechpaket (1) nach einem der Ansprüche 1 bis 6, wobei das Statorblechpaket (1) abgedreht ist.

9. Statorblechpaket (1) nach einem der Ansprüche 1 bis 8, mit Zähnen (23), wobei die Zahnhöhe (41) größer ist als die Höhe der endseitigen Druckplatte.

10. Statorblechpaket (1) nach einem der Ansprüche 1 bis 9, mit Zähnen (23), wobei die Zahnhöhe (41) größer ist als die Höhe des Jochs (42,43) oder die Höhe des Jochs (42,43) das 1,5-fache der Zahnhöhe (41) nicht übersteigt.

11. Statorblechpaket (1) nach einem der Ansprüche 5 bis 10, wobei der Abstand (54) der Riegel (3) in Umfangsrichtung kleiner ist als der Abstand (55) der Zwischenplatten (9) in axialer Richtung.

12. Statorblechpaket (1) nach einem der Ansprüche 1 bis 11, wobei dieses für einen Gondelantrieb (10) vorgesehen ist.

13. Verfahren zur Herstellung eines Statorblechpaketes (1), wobei endseitige Druckplatten (2,4) mit Riegel (3) verschweißt werden.

14. Verfahren nach Anspruch 13, wobei ein Statorblechpaket (1) nach einem der Ansprüche 1 bis 12 hergestellt wird.

15. Verfahren nach Anspruch 13 oder 14, das Statorblechpaket abgedreht wird.

16. Verfahren nach einem der Ansprüche 13 bis 15, wobei die endseitigen Druckplatten (2,4) abgedreht oder abgefräst werden.

17. Verfahren nach einem der Ansprüche 13 bis 16, wobei das Statorblechpaket (1) im Durchmesser (28,29) verkleinert wird um es in eine Gondel einzubringen.
